# EUROPÄISCHE PATENTSCHRIFT

(11) **EP 0 785 019 B1**
(45) Veröffentlichungstag und Bekanntmachung des Hinweises auf die Patenterteilung: **31.05.2000**
(21) Anmeldenummer: 97100519.4
(22) Anmeldetag: 15.01.1997
(51) Int. Cl.: B01J 19/32, B01D 3/28

(54) **Packung für Stoffaustauschkolonne**
Packing for mass transfer columns
Garnissage pour colonne d'échange de matière

(30) Priorität: 17.01.1996 DE 19601558
(43) Veröffentlichungstag der Anmeldung: 23.07.1997
(73) Patentinhaber: BASF AKTIENGESELLSCHAFT, 67056 Ludwigshafen (DE)
(72) Erfinder: Kaibel, Gerd, Dr., 68623 Lampertheim (DE); Rheude, Udo, Dr., 67166 Otterstadt (DE); Stroezel, Manfred, 68549 Ilvesheim (DE); Graauw, Jan de, Prof. Dr., 2724 Zoetermeer (NL); Olujic, Zarko, Dr., 2641 Pijnacker, (NL); Frey, Günther,, 40723 Hilden (DE); Jansen, Helmut, 41542 Dormagen (DE)
(74) Vertreter: Isenbruck, Günter, Dr.

(56) Entgegenhaltungen:
- EP-A- 0 433 222
- EP-A- 0 454 179
- DE-A- 3 002 385
- DE-A- 4 418 488

## Beschreibung

Die vorliegende Erfindung bezieht sich auf eine Packung zur Verwendung in einer Stoffaustauschkolonne für den Stoffaustausch zwischen einer flüssigen und einer gasförmigen Phase. Erfindungsgemäß wird auch eine entsprechende Stoffaustauschkolonne bereitgestellt.

Stoffaustauschkolonnen und die entsprechenden Packungen sind für eine Vielzahl von Anwendungen in einer Vielzahl von Gestaltungen bekannt. Einen Überblick über Rektifizierkolonnen gibt Ullmanns Encyklopädie der technischen Chemie, 4. Auflage, 1973, Band 2, Seite 516 ff. Die vorliegende Erfindung betrifft Packungen für Füllkörperkolonnen. Diese Packungen können dabei auf vielfältige Art und Weise gestaltet werden, vgl. Ullmanns, a.a.O., Seite 528 ff.

Optimierungsziel beim Einsatz von Füllkörperkolonnen ist die Erreichung hoher Trennleistungen bei geringem Druckverlust des durchgeleiteten Gases. Dieses Ziel wird mit handelsüblichen Packungen wie Montz A3 und Sulzer BX erreicht. Bei diesen Packungen werden mehrere Lagen von Geweben - bei anderen Bauformen auch Blechen - in einer Stoffaustauschkolonne derart senkrecht aneinander angeordnet, daß benachbarte Lagen mehr oder weniger dicht abgeschlossene Kanäle bilden, durch die das Gas der Flüssigkeit entgegenströmt. Diese Kanäle werden vorzugsweise gegen die Vertikale geneigt, wobei in der Regel die Kanäle der einen Lage und die Kanäle der nächsten Lage in verschiedene Richtungen geneigt sind. Diese Richtungen schließen regelmäßig mit der Vertikalen den gleichen Winkelbetrag, jedoch mit unterschiedlichem Vorzeichen, ein. Dabei können die Kanäle gerade oder gebogen sein. Statt Blech- oder Gewebelagen können auch Streckmetallagen mit oder ohne Perforation verwendet werden.

Zur Erhöhung der Trennleistung wurden Packungen vorgeschlagen, bei denen abwechselnd eine gewellte bzw. geknickte und eine ebene Lage senkrecht und parallel aneinander angeordnet werden. Derartige Vorrichtungen wurden bereits in CH 493 266 sowie in DE 846 092, DE 11 56 428, DE 11 96 217, DE 29 42 843, DE 30 02 385, US 2,470,652, US 3,664,095, US 3,727,384, beschrieben. Auch der Artikel "Apparate zur Destillation, Sorption und Extraktion" von R. Billet und O. Nagel, Chemie-Ing.-Technik 1964, 1257 ff., beschreibt eine Kolonnenpackung mit ebenen Zwischenlagen.

Trotz des verbesserten Gasflusses durch die genau definierten und strikt voneinander getrennten Kanäle wurde festgestellt, daß die Trennleistung bei diesen Vorrichtungen schlechter ist als bei herkömmlichen. Das führte dazu, daß diese Kolonnenpackungen nicht industriell eingesetzt werden.

Aufgabe der Erfindung ist somit die Verbesserung der Trennleistung bei vergleichbarem Druckverlust bei den beschriebenen Packungen, bei denen jede zweite Lage schwach gewellt oder eben ist.

Diese Aufgabe wurde gelöst durch die Bereitstellung einer Packung für eine Stoffaustauschkolonne, wie sie in den Ansprüchen beschrieben ist. Eine solche Packung besteht aus abwechselnd aneinander angeordneten ersten gewellten oder geknickten Lagen und zweiten gewellten, geknickten oder ebenen Lagen, wobei die ersten Lagen mit den zweiten Lagen jeweils Kanäle einschließen, durch die Gas und Flüssigkeit einander entgegengesetzt geführt werden. Dabei sind die ersten Lagen stärker gewellt oder geknickt als die zweiten Lagen. Die gebildeten Kanäle sind gegen die Vertikale geneigt, wobei die Kanäle benachbarter Lagen vorzugsweise um den gleichen Winkelbetrag zur Vertikalen, jedoch in entgegengesetzter Richtung, geneigt sind. Erfindungsgemäß reichen dabei die zweiten Lagen nicht in eine Randzone der Packung oder sie weisen in dieser Randzone eine erhöhte Gasdurchlässigkeit, insbesondere Löcher, auf. Als Randzone der Packung wird ein konzentrisches Volumenelement bezeichnet, das sich zwischen einer äußeren Zylinderfläche und einer inneren Zylinderfläche (die Packungen haben typischerweise zylindrische Form) erstreckt, wobei die äußere Zylinderfläche durch die äußeren Enden der ersten Lagen definiert ist und wobei die innere Zylinderfläche durch die äußeren Enden der zweiten Lagen definiert ist. Dabei schneidet die parallel zu den Packungslagen orientierte und durch die Kolonnenachse verlaufende horizontale Verbindungslinie der inneren mit der äußeren Zylinderfläche einen bis zwanzig, vorzugsweise drei bis zehn Kanäle. Bei nicht in die Randzone reichenden zweiten Lagen werden somit bis zu zwanzig Kanäle in der Randzone nebeneinander freigegeben. In die Randzone reichende zweite Lagen sind vorzugsweise auf 20 bis 90%, besonders bevorzugt auf 40 bis 60% ihrer Fläche, gasdurchlässig, also zum Beispiel mit Löchern versehen.

Im Rahmen der Erfindung wurde nämlich gefunden, daß es an den Stellen, an denen die durch die Bleche gebildeten Kanäle die Kolonnenwand berühren, zu Stauungen des aufsteigenden Gasstroms kommt, weil die Kanäle von der Kolonnenwand abgeschlossen werden. Das führt zu einer deutlich schlechteren Trennleistung der Packung. Durch die Öffnung der Packungskanäle in der Wandzone kann diese Ursache einer verminderten Trennleistung auf einfache und wirksame Weise beseitigt werden. Das Gas kann in diesem Fall von den an der Kolonnenwand endenden Kanälen in andere Kanäle überwechseln, die es in entgegengesetzter Richtung weiterführen.

Bevorzugt ist eine oben beschriebene Packung, bei der die zweiten Lagen eben sind. Bei der Verwendung ebener Bleche als zweite Lagen entstehen mehr abgeschlossene Kanäle in der Packung als bei der Verwendung von entsprechenden gewellten oder geknickten Lagen. Damit wird zwar einerseits ein geringerer Druckverlust erreicht, es tritt aber andererseits auch das geschilderte, auf dem Rückstau von Gas in den Kanälen beruhende Problem in stärkerem Maße auf. Die erfindungsgemäße Gestaltung der Packung bietet hier also besondere Vorteile.

Eine weitere bevorzugte Ausführungsform besteht darin, daß die zweiten Lagen am oberen und/oder unteren Ende der Packung 5 mm bis 50 mm, vorzugsweise 10 mm bis 20 mm, tiefer bzw. höher enden als die ersten Lagen. Dadurch wird vermieden, daß bei der Aufeinanderstapelung von Packungen durch teilweisen Abschluß ein Flüssigkeitsstau in der Grenzzone der aufeinander gestapelten Packungselemente auftritt. Mit dem dadurch auftretenden Fluten der Kolonne bricht der Stoffaustausch weitgehend zusammen. Die erfindungsgemäße Anordnung vermeidet diesen Nachteil, indem sie den Übertritt von Gas und Flüssigkeit von einer Packung zur nächsten erleichtert. Als weitere Möglichkeit bietet es sich an, die zweiten Lagen am oberen und/oder unteren Ende der Packung in einer Breite von 10 bis 50 mm, bevorzugt 20 bis 30 mm, mit Löchern mit einem Durchmesser von bevorzugt 5 bis 10 mm zu versehen, die in diesem Bereich 10 bis 30 % der Fläche frei lassen. Alternativ können die zweiten Lagen am oberen und/oder unteren Ende der Packung über eine Breite von 10 bis 50 mm, bevorzugt 20 bis 30 mm, mit einem sägezahnartig gezackten Rand ausgeführt werden, wobei der Winkel, in dem die Zacken zulaufen, bevorzugt 30 bis 60° beträgt.

Vorzugsweise beträgt die Breite der Wellen oder Knicke der gewellten oder geknickten Lagen 5 bis 20 mm. Die Neigung der Kanäle gegen die Vertikale beträgt vorzugsweise 15° bis 60°, besonders bevorzugt 30° bis 45°. Die typische Höhe der Packungselemente beträgt 17 cm. Der Packungsdurchmesser beträgt vorzugsweise mehr als 50 cm, besonders bevorzugt mehr als 100 cm. Diese Werte haben sich in der Praxis als besonders praktikabel oder vorteilhaft erwiesen.

In einer weiteren bevorzugten Ausführungsform weisen die ersten und/ oder zweiten Lagen deutlich erhöhte Rauhigkeit auf. Dadurch wird eine bessere Gleichverteilung der Flüssigkeit in den Kanälen erreicht. Die Lagen können dabei sowohl gleiche wie auch unterschiedliche Rauhigkeit aufweisen.

Zur Verwendung bei katalytischen Reaktionen bestehen die ersten und/ oder zweiten Lagen vorzugsweise ganz oder teilweise aus katalytisch wirksamem Material oder enthalten ein solches, insbesondere in Form einer Oberflächenbeschichtung.

Bei einer weiteren bevorzugten Ausführungsform wird die Flüssigkeitsberieselungsdichte in einem zylindrischen Randbereich der Packung, dessen Fläche 1 bis 15%, vorzugsweise 3 bis 6%, der Querschnittsfläche der Packung entspricht, um 1 bis 15%, vorzugsweise 2 bis 5%, höher eingestellt, wenn der Packungsbereich, zu dem der Randbereich gehört, ein Verstärkungsteil ist, und um 1 bis 15%, vorzugsweise 2 bis 5%, niedriger eingestellt, wenn der Packungsbereich, zu dem der Randbereich gehört, ein Abtriebsteil ist.

Diese ungleiche Flüssigkeitsberieselungsdichte kann durch eine entsprechend verschiedene Dimensionierung der Flüssigkeitszuflußöffnungen erreicht werden. Andere konstruktive Maßnahmen sind Ableitbleche für die Flüssigkeit, die an der Kolonnenwand angebracht werden. Durch die Ungleichverteilung der Flüssigkeitsberieselungsdichte in der beschriebenen Weise kann die Effizienz der Packung nochmals deutlich erhöht werden. Maßnahmen zur Variierung der Flüssigkeitsberieselungsdichte sind in P 44 18 488.3 beschrieben. Darauf wird Bezug genommen.

Erfindungsgemäß wird auch eine Kolonne zum Stoffaustausch zwischen einer flüssigen und einer gasförmigen Phase bereitgestellt, die eine die Kolonne bis auf geringe Randspalte ausfüllende Packung aufweist, wobei die Packung einer der vorstehend beschriebenen Ausführungsformen entspricht.

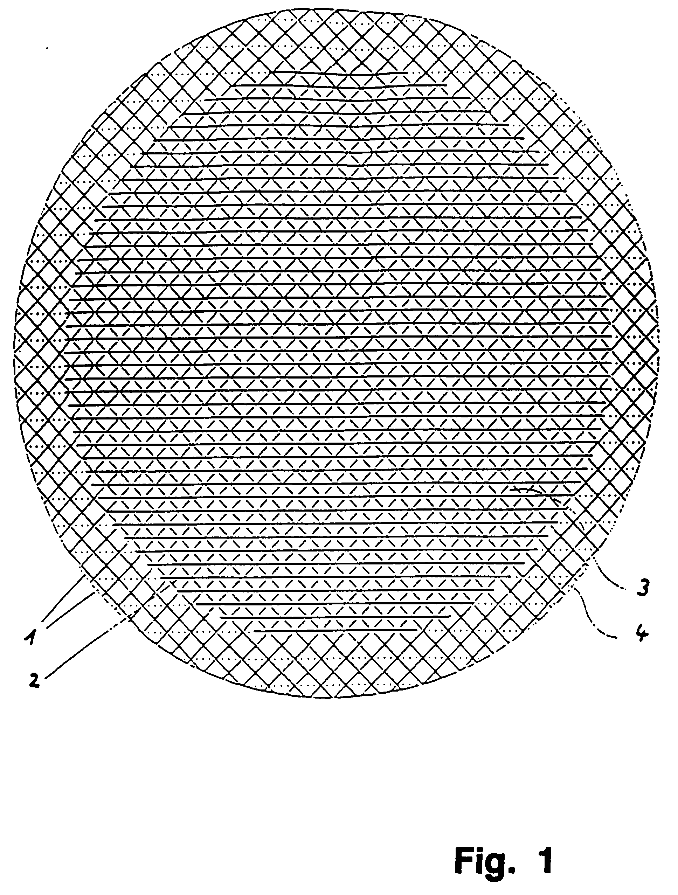

Die Erfindung wird im folgenden anhand der Figur 1 beschrieben, die eine bevorzugte Ausführungsform des erfindungsgemäßen Packungsdesigns zeigt. Figur 1 zeigt einen horizontalen Schnitt durch eine erfindungsgemäße Pakkung. Erste geknickte Lagen 1 verlaufen dabei in der Figur 1 waagerecht von links nach rechts, ebene Lagen 2 parallel dazu. In dem Kernbereich 3 der Packung bilden sich durch die Aneinanderlagerung der geknickten und der ebenen Bleche Kanäle aus, in denen der Stoffaustausch stattfindet. Dabei reichen die Lagen 2 nicht bis in den Randbereich 4 der Packung, sodaß ein Abschluß der Kanäle an der Kolonnenwand nicht auftritt und Stauungen des durchgeleiteten Gases ganz oder weitgehend vermieden werden. Auf diese Weise wird eine höhere Trennleistung der Kolonne bei gleichem Druckverlust erreicht.

## Patentansprüche

1. Packung zur Verwendung in einer Stoffaustauschkolonne, bestehend aus abwechselnd aneinander angeordneten ersten gewellten oder geknickten Lagen und zweiten gewellten, geknickten oder ebenen Lagen,
wobei die ersten Lagen stärker gewellt oder geknickt sind als die zweiten Lagen,
wobei die ersten Lagen mit den zweiten Lagen jeweils Kanäle einschließen, welche gegen die Vertikale geneigt sind, und
wobei die Kanäle benachbarter Lagen vorzugsweise um den gleichen Winkelbetrag zur Vertikalen, jedoch in entgegengesetzter Richtung geneigt sind,
dadurch gekennzeichnet, daß
die zweiten Lagen nicht in eine Randzone der Packung reichen oder in der Randzone der Packung eine erhöhte Gasdurchlässigkeit, insbesondere Löcher, aufweisen,
wobei die konzentrische Randzone der Packung von einer äußeren zylindrischen Fläche, die durch die äußeren Enden der ersten Lagen definiert ist, bis zu einer inneren zylindrischen Fläche reicht, die durch die äußeren Enden der zweiten Lagen definiert ist, wobei die parallel zu den Packungslagen orientierte und durch die Kolonnenachse verlaufende horizontale Verbindungslinie der inneren mit der äußeren zylindrischen Fläche einen bis zwanzig, vorzugsweise drei bis zehn Kanäle, schneidet.

2. Packung nach einem der vorhergehenden Ansprüche, dadurch gekennzeichnet, daß die zweiten Lagen eben sind.

3. Packung nach einem der vorhergehenden Ansprüche, dadurch gekennzeichnet, daß die zweiten Lagen am oberen und/oder unteren Ende der Packung 5 mm bis 50 mm, vorzugsweise 10 mm bis 20 mm tiefer bzw. höher enden als die ersten Lagen.

4. Packung nach einem der vorhergehenden Ansprüche, dadurch gekennzeichnet, daß die zweiten Lagen am oberen und/oder unteren Ende der Packung in einer Breite von 10 bis 50 mm, bevorzugt 20 bis 30 mm, mit Löchern mit einem Durchmesser von bevorzugt 5 bis 10 mm versehen sind, die in diesem Bereich 10 bis 30 % der Fläche frei lassen oder am oberen und/oder unteren Ende der Packung über eine Breite von 10 bis 50 mm, bevorzugt 20 bis 30 mm, mit einem sägezahnartig gezackten Rand ausgeführt werden, wobei der Winkel, in dem die Zacken zulaufen, bevorzugt 30 bis 60° beträgt.

5. Packung nach einem der vorhergehenden Ansprüche, dadurch gekennzeichnet, daß die Breite der Wellen oder Knicke der gewellten oder geknickten Lagen 5 bis 20 mm beträgt, und/oder daß die Kanäle um einen Winkel von 15° bis 60°, vorzugsweise von 30° bis 45°, gegen die Vertikale geneigt sind.

6. Packung nach einem der vorhergehenden Ansprüche, dadurch gekennzeichnet, daß der Packungsdurchmesser mehr als 50 cm, vorzugsweise mehr als 100 cm, beträgt.

7. Packung nach einem der vorhergehenden Ansprüche, dadurch gekennzeichnet, daß die ersten und/oder zweiten Lagen ganz oder teilweise aus katalytisch wirksamem Material bestehen oder ein solches, insbesondere als Oberflächenbeschichtung, enthalten.

8. Packung nach einem der vorhergehenden Ansprüche, dadurch gekennzeichnet, daß die Flüssigkeitsberieselungsdichte in einem zylindrischen Randbereich der Packung, dessen Fläche 1 bis 15%, vorzugsweise 3 bis 6%, der Querschnittsfläche der Packung entspricht, um 1 bis 15%, vorzugsweise 2 bis 5%, höher eingestellt wird, wenn der Packungsbereich, zu dem der Randbereich gehört, ein Verstärkungsteil ist, und um 1 bis 15%, vorzugsweise 2 bis 5%, niedriger eingestellt wird, wenn der Packungsbereich, zu dem der Randbereich gehört, ein Abtriebsteil ist.

9. Packung nach einem der vorhergehenden Ansprüche, dadurch gekennzeichnet, daß die in die Randzone reichenden zweiten Lagen auf 20 bis 90%, vorzugsweise 40 bis 60%, ihrer Fläche gasdurchlässig, insbesondere mit Öffnungen versehen sind.

10. Kolonne zum Stoffaustausch zwischen einer flüssigen und einer gasförmigen Phase mit einer die Kolonne bis auf geringe Randspalte ausfüllenden Packung, dadurch gekennzeichnet, daß die Packung nach einem der vorhergehenden Ansprüche aufgebaut ist.

## Claims

1. Packing for use in a mass-transfer column, consisting of first waved or bent layers and second waved, bent or flat layers arranged alternately against one another,
where the first layers are waved or bent to a greater extent than the second layers,
where the first layers in each case enclose channels with the second layers, which channels are inclined to the vertical, and
where the channels of adjacent layers are preferably inclined to the vertical by the same angle, but in the opposite direction,
characterized in that
the second layers do not extend into a peripheral zone of the packing or have increased gas permeability, in particular holes, in the peripheral zone of the packing,
where the concentric peripheral zone of the packing extends from an outer cylindrical surface, which is defined by the outer ends of the first layers, to an inner cylindrical surface, which is defined by the outer ends of the second layers, where the horizontal connecting line from the inner to the outer cylindrical surfaces, which is oriented parallel to the packing layers and extends through the column axis, cuts from one to twenty, preferably from three to ten channels.

2. Packing according to one of the preceding Claims, characterized in that the second layers are flat.

3. Packing according to one of the preceding Claims, characterized in that the second layers end from 5 mm to 50 mm, preferably from 10 mm to 20 mm, lower or higher than the first layers at the upper and/or lower end of the packing.

4. Packing according to one of the preceding Claims, characterized in that the second layers are provided at the upper and/or lower end of the packing in a width of from 10 to 50 mm, preferably from 20 to 30 mm, with holes having a diameter of preferably from 5 to 10 mm which leave from 10 to 30% of the surface free in this region, or are designed with a sawtooth-like serrated edge at the upper and/or lower end of the packing over a width of from 10 to 50 mm, preferably from 20 to 30 mm, where the angle at which the teeth taper is preferably from 30 to 60°.

5. Packing according to one of the preceding Claims, characterized in that the width of the waves or bends of the waved or bent layers is from 5 to 20 mm, and/or in that the channels are inclined to the vertical by an angle of from 15° to 60°, preferably from 30° to 45°.

6. Packing according to one of the preceding Claims, characterized in that the packing diameter is greater than 50 cm, preferably greater than 100 cm.

7. Packing according to one of the preceding Claims, characterized in that the first and/or second layers consist entirely or partly of catalytically active material or comprise a catalytically active material, in particular as a surface coating.

8. Packing according to one of the preceding Claims, characterized in that the liquid trickle density in a cylindrical edge region of the packing whose area corresponds to from 1 to 15%, preferably from 3 to 6%, of the cross-sectional area of the packing, is set from 1 to 15%, preferably from 2 to 5%, higher if the packing region to which the edge region belongs is a rectifying section, and is set from 1 to 15%, preferably from 2 to 5%, lower if the packing region to which the edge region belongs is a stripping section.

9. Packing according to one of the preceding Claims, characterized in that the second layers extending into the peripheral zone are gas-permeable, in particular are provided with openings, over from 20 to 90%, preferably from 40 to 60%, of their area.

10. Column for mass transfer between a liquid phase and a gaseous phase, having packing which fills the column apart from a small peripheral gap, characterized in that the packing is constructed in accordance with one of the preceding Claims.

## Revendications

1. Garnissage à utiliser dans une colonne d'échange de matière, constitué de premières couches ondulées ou coudées et de deuxièmes couches ondulées, coudées ou planes qui sont agencées alternativement l'une sur l'autre, les premières couches étant ondulées ou coudées plus fortement que les deuxièmes couches, les premières couches formant avec les deuxièmes couches des canaux qui sont inclinés vis-à-vis de la verticale, les canaux de couches voisines étant de préférence inclinés par rapport à la verticale de la même valeur d'angle, mais en sens opposé, caractérisé en ce que les deuxièmes couches n'atteignent pas une zone marginale du garnissage ou présentent dans la zone marginale du garnissage une perméabilité élevée aux gaz, en particulier des trous, la zone marginale concentrique du garnissage allant d'une surface cylindrique externe, qui est formée par les extrémités extérieures des premières couches, jusqu'à une surface cylindrique interne qui est formée par les extrémités extérieures des deuxièmes couches, la ligne de liaison horizontale de la surface cylindrique interne à la surface cylindrique externe, qui est orientée parallèlement aux couches de garnissage et s'étend à travers l'axe de la colonne, croisant un à vingt, de préférence trois à dix, canaux.

2. Garnissage suivant l'une des revendications précédentes, caractérisé en ce que les deuxièmes couches sont planes.

3. Garnissage suivant l'une des revendications précédentes, caractérisé en ce que les deuxièmes couches se terminent à l'extrémité supérieure et/ou inférieure du garnissage 5 mm à 50 mm, de préférence 10 mm à 20 mm, plus profond ou respectivement plus haut que les premières couches.

4. Garnissage suivant l'une des revendications précédentes, caractérisé en ce que les deuxièmes couches sont, à l'extrémité supérieure et/ou inférieure du garnissage, pourvues, sur une largeur de 10 à 50 mm, de préférence de 20 à 30 mm, de trous ayant un diamètre avantageusement de 5 à 10 mm, qui libèrent dans cette zone 10 à 30% de la surface, ou sont réalisées, à l'extrémité supérieure et/ou inférieure du garnissage, sur une largeur de 10 à 50 mm, de préférence de 20 à 30 mm, avec un bord en dents de scie, l'angle, sous lequel les dents se terminent, étant de préférence de 30 à 60°.

5. Garnissage suivant l'une des revendications précédentes, caractérisé en ce que la largeur des ondes ou coudes des couches ondulées ou coudées est de 5 à 20 mm et/ou en ce que les canaux sont inclinés par rapport à la verticale d'environ un angle de 15° à 60°, de préférence de 30° à 45°.

6. Garnissage suivant l'une des revendications précédentes, caractérisé en ce que le diamètre du garnissage est supérieur à 50 cm, de préférence supérieur à 100 cm.

7. Garnissage suivant l'une des revendications précédentes, caractérisé en ce que les premières et/ou deuxièmes couches sont totalement ou partiellement constituées d'une matière catalytiquement active ou contiennent une telle matière, en particulier sous la forme d'un revêtement de surface.

8. Garnissage suivant l'une des revendications précédentes, caractérisé en ce que la densité de ruissellement du liquide dans un zone marginale cylindrique du garnissage, dont la surface correspond à 1 jusqu'à 15%, de préférence à 3 jusqu'à 6%, de la surface en section transversale du garnissage, est ajustée de 1 à 15%, de préférence de 2 à 5%, plus haut lorsque la zone du garnissage, à laquelle la zone marginale appartient, est une partie de concentration, et elle est ajustée de 1 à 15%, de préférence de 2 à 5%, plus bas lorsque la zone du garnissage à laquelle la zone marginale appartient est une partie de rectification.

9. Garnissage suivant l'une des revendications précédentes, caractérisé en ce que les deuxièmes couches allant dans la zone marginale sont perméables aux gaz sur 20 à 90%, de préférence 40 à 60%, de leur surface, en étant en particulier pourvues d'ouvertures.

10. Colonne pour l'échange de matière entre une phase liquide et une phase gazeuse comprenant un garnissage remplissant la colonne à l'exception d'un faible intervalle marginal, caractérisée en ce que le garnissage est constitué suivant l'une des revendications précédentes.
